# EUROPÄISCHE PATENTANMELDUNG

(11) **EP 2 090 776 A2**
(43) Veröffentlichungstag der Anmeldung: **19.08.2009**
(21) Anmeldenummer: 09001984.5
(22) Anmeldetag: 12.02.2009
(51) Int. Cl.: F03D 9/00

(54) **Verfahren zum Bereitstellen von Betriebsdaten eines Windparks**

(30) Priorität: 14.02.2008 DE 102008009159
(71) Anmelder: REpower Systems AG, 22297 Hamburg (DE)
(72) Erfinder: Kunft, Guntram, 24768 Rendsburg (DE); Elsner, Ralf, 24943 Flensburg (DE); Book, Markus, 24118 Kiel (DE); Prinz, Matthias, 24242 Felde (DE)
(74) Vertreter: Glawe, Delfs, Moll

(57) **Zusammenfassung**

Die Erfindung betrifft ein Verfahren zum Bereitstellen von Betriebsdaten eines Windparks (10), wobei der Windpark (10) eine Mehrzahl von Windparkkomponenten (11, 13, 15) umfasst. Die Betriebsdaten der Windparkkomponenten (11, 13, 15) werden aufgenommen und in der betreffenden Windparkkomponente (11, 13, 15) gespeichert. Das Verfahren zeichnet sich dadurch aus, dass die die Betriebsdaten in einem Push-Verfahren an eine Mehrzahl von Empfängern gesendet werden. Das Verfahren vereinfacht die Verwaltung der Betriebsdaten und benötigt nur wenig Übertragungskapazität in der Datenleitung der Windparkkomponente (11, 13, 15).

## Beschreibung

Die Erfindung betrifft ein Verfahren zum Bereitstellen von Betriebsdaten eines Windparks. Der Windpark umfasst mehrere Windparkkomponenten, wobei in jeder Windparkkomponente Betriebsdaten aufgenommen werden. Die Betriebsdaten werden in der betreffenden Windparkkomponente gespeichert.

Aus den Betriebsdaten können vielfältige Schlüsse über den Betrieb des Windparks gezogen werden. Es ist deswegen üblich, dass der Betreiber, der die Verantwortung für den ordnungsgemäßen Betrieb des Windparks bzw. der Windparkkomponenten trägt, die Betriebsdaten auswertet. Dazu werden die Betriebsdaten über eine Datenleitung an ein Rechenzentrum des Betreibers übermittelt. Vor der Übermittlung werden die Daten im Windpark auf eigens dafür eingerichteten Datenservern bereitgestellt, die die Daten
bei den Windparkkomponenten auslesen, aufbereiten und gebündelt
an das Rechenzentrum übertragen. Anhand der Ergebnisse der Auswertung kann der Betrieb des Windparks bzw. der Windparkkomponenten optimiert werden oder es können Hinweise auf eine verbesserte Konfiguration zukünftiger Windparks gewonnen werden.

Da er für einen ordnungsgemäßen Betrieb verantwortlich ist, hat der Betreiber Zugang zu den Windparkkomponenten. Er kann die Windparkkomponenten warten, Teile austauschen und alle Änderungen vornehmen, die er für erforderlich hält. In diesem Zusammenhang ist es für den Betreiber ohne weiteres möglich, sich Zugang zu den Betriebsdaten zu verschaffen und die Betriebsdaten in beliebiger Weise zu übertragen, darzustellen und auszuwerten.

Häufig haben aber auch die Kunden, die den in dem Windpark produzierten elektrischen Strom abnehmen, ein Interesse daran, die Betriebsdaten zu erhalten, um sie für ihre Zwecke auswerten zu können. Anders als die Betreiber haben die Kunden keinen unmittelbaren Zugriff auf die Windparkkomponenten, sondern sind auf die Mitwirkung des Betreibers angewiesen, um die Betriebsdaten zu erhalten.

Bislang richtet der Kunde eine Anfrage an den Betreiber und bittet um Zusendung der Betriebsdaten zum Zwecke der Auswertung. Der Betreiber greift daraufhin auf seinen Datenbestand zu, sucht die gewünschten Betriebsdaten heraus und sendet sie an den Kunden.

Teilweise unterhalten die Betreiber Rechenzentren, auf denen die von einem Datenserver des Windparks übertragenen Betriebsdaten gespeichert sind. Die Kunden erhalten über Benutzerkennung und Passwort Zugang zu bestimmten Ausschnitten des Rechenzentrums und können die betreffenden Betriebsdaten von dem Rechenzentrum herunterladen. Dieses Verfahren hat Nachteile. Erstens ist es für den Betreiber mit einigem Aufwand verbunden, den Zugriff auf das Rechenzentrum so zu verwalten, dass jeder Kunde auf genau die Betriebsdaten Zugriff erhält, die für ihn relevant sind.

Zweitens liegen die Betriebsdaten in dem Rechenzentrum nicht mehr in Rohform vor, sondern der Betreiber hatte bereits Gelegenheit, die Betriebsdaten zu bearbeiten. Regelmäßig sind die Daten beispielsweise so bearbeitet, dass sie in einem für die Auswertung günstigen Format vorliegen. Darüber hinaus ist es für den Betreiber aber auch ohne weiteres möglich, die Daten inhaltlich zu verändern. Zieht man in Betracht, dass der Betreiber und der Kunde zum Teil gegenläufige Interessen haben und dass der Betreiber ein erhebliches Interesse daran haben kann, geschönte Informationen über den Betrieb des Windparks zu verbreiten, ist es für den Kunden unbefriedigend, darauf vertrauen zu müssen, dass er vom Betreiber unverfälschte Betriebsdaten erhält. Darüber hinaus kann es sein, dass der Kunde eine Mehrzahl von Windparks unterhält, die von unterschiedlichen Betreibern betrieben werden. Die Betriebsdaten der Windparks sind dann häufig nicht miteinander kompatibel. Der Kunde muss einen erheblichen Aufwand betreiben, um sich einen Überblick über die Windparks zu verschaffen und um deren Betriebsdaten auszuwerten.

Die Kunden haben deswegen ein Interesse daran, Zugang zu den Betriebsdaten im Rohzustand zu erhalten, bevor der Betreiber Gelegenheit hatte, sie zu verändern. Man befriedigt dieses Interesse, indem man dem Kunden Zugang zu dem im Windpark befindlichen Datenserver ermöglicht. Alternativ könnte man dem Kunden Zugriff auf einen in der Windparkkomponente angeordneten Speicher geben. In der Regel ist jedoch die Datenleitung, über die ein Zugriff des Kunden auf den Datenserver oder die Windparkkomponente mit ihrem Speicher möglich wäre, dieselbe Datenleitung, die auch der Betreiber nutzt, um eine Fernwartung durchzuführen oder eine neue Steuersoftware aufzuspielen. Soll der Kunde über diese Datenleitung Zugriff auf die Windparkkomponente erhalten, so muss absolut sichergestellt sein, dass sein Zugriff nur auf die für den Kunden bestimmten Betriebsdaten beschränkt ist und dass keine Möglichkeit besteht, Einfluss auf die Steuerung der Windparkkomponente zu nehmen. Es bedeutet erheblichen Aufwand für den Betreiber, die erforderliche klare Trennung sicherzustellen.

Ferner sind die ersten Meter der Datenleitung nach der Windparkkomponente häufig schmalbandig. In der Regel ist in der Windparkkomponente lediglich ein klassisches Modem für die Datenübertragung vorgesehen. Hätte nun der Kunde nach Belieben die Möglichkeit, auf die Windparkkomponente zuzugreifen, um Betriebsdaten herunterzuladen, so kann die Datenleitung überlastet werden. Es besteht die Gefahr, dass der Betreiber eine Wartung nicht durchführen kann, weil die Datenleitung durch das Herunterladen von Betriebsdaten belegt ist.

Der Erfindung liegt die Aufgabe zu Grunde, ein kostengünstiges und sicheres Verfahren vorzustellen, um Betriebsdaten eines Windparks für die Kunden bereitzustellen. Die Aufgabe wird dadurch gelöst, dass die Betriebsdaten im Push-Verfahren an einen Empfänger außerhalb des Windparks gesendet werden.

Zunächst werden einige Begriffe erläutert. Ein Windpark umfasst eine Mehrzahl von Windenergieanlagen, in denen Windenergie in elektrische Energie umgewandelt wird. Außer den Windenergieanlagen gehören zu einem Windpark weitere Windparkkomponenten, wie beispielsweise eine Wetterstation und eine Übergabestation. In der Übergabestation wird der erzeugte Strom an das öffentliche Stromnetz übergeben. In allen Windparkkomponenten werden Betriebsdaten aufgenommen. Die Betriebsdaten betreffen entweder Umgebungsbedingungen oder Betriebszustände der jeweiligen Windparkkomponente, die in einem Zusammenhang mit dem im Windpark erzeugten Strom oder der erzeugten Leistung stehen. Informationen, die nicht in einem Zusammenhang mit der Stromerzeugung stehen, wie beispielsweise die Frage, ob die Eingangstür einer Windenergieanlage ordnungsgemäß verschlossen ist, sind keine Betriebsdaten im Sinne der Erfindung.

In der Wetterstation anfallende Betriebsdaten können beispielsweise die Temperatur, die Windgeschwindigkeit und die Luftfeuchtigkeit sein. In einer Windenergieanlage werden Betriebsdaten über die erzeugte elektrische Leistung, die Drehzahl, Fehlermeldungen aufgenommen. Die Fehlermeldungen stehen in einem Zusammenhang mit dem erzeugten Strom oder der erzeugten Leistung, insbesondere können sie ein Abschalten der betreffenden Windparkkomponente zur Folge haben. Gespeichert werden außer einer Folge von Einzelwerten üblicherweise auch Mittelwerte über Zeitintervalle. In der Übergabestation werden der Spannungsverlauf und der Phasenwinkel zwischen Strom und Spannung als Betriebsdaten gespeichert. Aus diesen Betriebsdaten können Schlüsse auf den Betrieb und das Verhalten des Windparks bzw. der Windparkkomponenten gezogen werden. Ein ggf. im Windpark vorhandener Datenserver, der nur zur Speicherung von im Windpark anfallenden Daten, zur Verwaltung von Daten und zur Übertragung von Daten nach außen dient, der also keine Steuerungsfunktion für die anderen Windparkkomponenten übernimmt, ist vom Begriff Windparkkomponente nicht umfasst. In einem solchen Datenserver fallen weder Daten über Umgebungsbedingungen noch gibt es in dem Datenserver Betriebszustände, die in einem Zusammenhang mit dem im Windpark erzeugten Strom stehen. In dem Datenserver werden also keine Betriebsdaten im Sinne der Erfindung aufgenommen.

Als Push-Verfahren wird ein Sendeverfahren dann bezeichnet, wenn der Sendevorgang in der Windparkkomponente eingeleitet wird. Der Beginn des Sendevorgangs ist lediglich von Bedingungen abhängig, die in der Windparkkomponente selbst festgestellt werden können. Die Betriebsdaten werden also nicht unmittelbar gesendet, nachdem sie aufgenommen worden sind, sondern sie werden zunächst über einen gewissen Zeitraum in der Windparkkomponente gesammelt und gespeichert und bei Eintritt einer vorgegebenen Bedingung gesendet.

Ein Empfänger ist dann außerhalb des Windparks, wenn die Betriebsdaten auf dem Weg von der Windparkkomponente zum Empfänger durch eine Datenleitung übermittelt werden, die nicht mehr im Verantwortungsbereich des Windparkbetreibers liegen. Ab einem Übergabepunkt, ab dem der Kunde die Verantwortung für die Datenleitung trägt, ist die Datenleitung außerhalb des Windparks. Die Betriebsdaten werden direkt von der Windparkkomponente an den Empfänger außerhalb des Windparks gesendet, der betreffende Empfänger wird also bereits in der Windparkkomponente festgelegt. Nicht Gegenstand der Erfindung ist es also, wenn die Betriebsdaten von der Windparkkomponente zunächst an einen Datenserver des Windparks gesendet werden und von dort an einen Empfänger außerhalb des Windparks weitergeleitet werden.

Die Erfindung stellt ein Verfahren vor, mit dem auf sichere und kostengünstige Weise Betriebsdaten im Rohzustand einem Empfänger außerhalb des Windparks zur Verfügung gestellt werden können. Durch Versenden der Betriebsdaten von jeder Windparkkomponente direkt an den Empfänger entfällt das Erfordernis eines Datenservers und eines klimatisierten Serverraums im Windpark. Die Kosten sinken und die Zuverlässigkeit steigt, da weniger fehlerbehaftete Komponenten verwendet werden. Die Kundenbedürfnisse werden befriedigt, ohne dass der Kunde einen Datenzugang zur Windenergieanlage benötigt. Sowohl beim Kunden als auch beim Betreiber verringert sich der Aufwand für die Datenverarbeitung. Bei Ausfall eines Datenspeichers ist der Datenverlust auf die betreffende Windparkkomponente beschränkt. Durch das Verfahren tritt im Windpark ein höhere Anzahl an Datenverbindungen auf, die aber in der Summe ein geringeres Datenvolumen haben. Insgesamt ist das Datenvolumen kleiner, da nicht mehr jede Windparkkomponente alle Daten an einen Datenserver übertragen muss, der dann die relevanten Daten auswählt, sondern von Anfang an nur die relevanten Daten versendet werden. Für die häufig schmalbandige Datenleitung innerhalb des Windparks bedeutet das erfindungsgemäße Verfahren insbesondere dann einen Vorteil, wenn die Daten an mehrere Empfänger verteilt werden.

Die Empfänger können Server des Kunden sein oder einzelne Rechner, beispielsweise in einer Leitstelle des Stromversorgungsnetzes. Die Empfänger können weit entfernt vom Windpark sein und über das öffentliche Internet angebunden sein.

Die Bedingungen, von denen das Einleiten des Sendevorgangs abhängt, können beispielsweise sein der Ablauf einer vorgegebenen Zeitspanne oder das Überschreiten einer vorgegebenen Menge an Betriebsdaten im Speicher der Windparkkomponente. Diese Ereignisse treten regelmäßig und vorhersehbar auf. In einer vorteilhaften Variante des Verfahrens wird der Sendevorgang in Abhängigkeit von einem nicht-regelmäßigen Ereignis eingeleitet. Ein solches nicht-regelmäßiges Ereignis kann beispielsweise eine vorbestimmte Fehlermeldung sein oder das Abschalten einer Windenergieanlage. Insbesondere das Abschalten einer Windenergieanlage oder gar eines ganzen Windparks stellt das Stromversorgungsnetz vor Probleme, weil die weggefallene Einspeiseleistung kurzfristig aus anderen Quellen ersetzt werden muss. Für das Stromversorgungsnetz ist viel gewonnen, wenn es die Information über das Abschalten nicht erst durch den Spannungsabfall, sondern bereits vorher erhält. Selbst ein Unterschied von nur wenigen Sekunden kann wertvoll sein.

Möglich ist es auch, die Betriebsdaten bereits dann zu senden, wenn ein Ereignis eintritt, das mit einer gewissen Wahrscheinlichkeit zu einem Abschalten der Windenergieanlage führen wird. Dies kann beispielsweise ein Anstieg der Windgeschwindigkeit oder ein Anstieg der Generatortemperatur sein. Die in einem solchen Fall übermittelten Betriebsdaten können eine Vorwarnung für das Stromversorgungsnetz sein.

Umfasst sind auch nicht-regelmäßige Ereignisse in der Windparkkomponenten, deren Grundlage außerhalb des Windparks gelegt wird. Beispielsweise kann ein Empfänger der Windparkkomponente Nachricht geben, dass er die Übermittlung von Betriebsdaten wünscht. Der Eingang der Nachricht bei der Windparkkomponente ist ein nicht-regelmäßiges Ereignis, das die Windparkkomponente zum Anlass nehmen kann, die Betriebsdaten an den betreffenden Empfänger zu senden.

Wie dargelegt kann das Senden der Betriebsdaten durch unterschiedliche Arten von Ereignissen ausgelöst werden. Bei einer Weiterbildung der Erfindung wird in Abhängigkeit von der Art des Ereignisses entschieden, an welche Empfänger die Betriebsdaten gesendet werden. So kann vorgesehen sein, dass die Betriebsdaten bei einer ersten Art von Ereignis nur an einen einzelnen Empfänger gesendet werden, dass die Betriebsdaten bei einer zweiten Art von Ereignis an aus einer Liste ausgewählte Empfänger gesendet werden und dass bei einer dritten Art von Ereignis alle Empfänger der Liste die Daten enthalten. Dadurch wird erreicht, dass die Betriebsdaten zielgenauer verteilt werden. So kann es beispielsweise sein, dass ein durch eine Fehlermeldung einer Windenergieanlage ausgelöstes Senden der Daten ausschließlich für den Betreiber der Windenergieanlage und damit für einen einzelnen Empfänger von Interesse ist. Hingegen kann beispielsweise das durch Ablauf einer Zeitspanne ausgelöste Senden der Daten eine statistische Auswertung ermöglichen und damit für eine Vielzahl von Empfängern von Interesse sein.

Es kann vorgesehen sein, dass die Zeitpunkte, zu denen die Betriebsdaten von der Windparkkomponente an den Empfänger gesendet werden, voreingestellt werden können. Die Betriebsdaten können von verschiedenen Windparkkomponenten zu aufeinander abgestimmten Zeitpunkten gesendet werden. Die Zeitpunkte können so aufeinander abgestimmt sein, dass die Betriebsdaten gleichzeitig gesendet werden. Eine Überlastung der Datenleitung kann vermieden werden, indem die Zeitpunkte so aufeinander abgestimmt werden, dass die Sendezeiträume einer Mehrzahl von Windenergieanlagen sich nicht überschneiden.

Die Betriebsdaten können an mehrere Empfänger zeitgleich gesendet werden. Alternativ ist es möglich, dass die Sendezeitpunkte auch bei mehreren Empfängern und mehreren Windparkkomponenten so aufeinander abgestimmt sind, dass die Sendezeiträume sich nicht überschneiden.

Die Betriebdaten können dauerhaft in der Windparkkomponente gespeichert werden. Häufig wird jedoch die Speicherkapazität in der Windparkkomponente begrenzt sein. Vorteilhaft ist es dann, wenn die Betriebsdaten zu geeigneten Zeitpunkten wieder aus dem Speicher der Windparkkomponente gelöscht werden. Die Betriebsdaten sollten jedoch nicht gelöscht werden, bevor die Betriebsdaten an alle Empfänger erfolgreich übertragen worden sind. Das Löschen kann auch davon abhängig gemacht werden, dass seit dem Aufnehmen der Betriebsdaten ein vorgegebener Zeitraum verstrichen ist. Ebenfalls möglich ist es, dass die jeweils ältesten Betriebsdaten dann aus dem Speicher der Windparkkomponente gelöscht werden, wenn mit den neuen Betriebsdaten ein bestimmtes Datenvolumen oder eine bestimmte Anzahl von Datensätzen überschritten wird.

Die Informationen über die verschiedenen Empfänger sind vorzugsweise in den Windparkkomponenten hinterlegt. Außer den jeweiligen Empfängeradressen kann jeweils auch ein Datenformat hinterlegt sein, in dem der Empfänger die Betriebsdaten zu erhalten wünscht. Die Sicherheit der Datenübertragung kann erhöht werden, wenn die Betriebsdaten in verschlüsselter Form an den Empfänger gesendet werden.

Vorzugsweise werden die Betriebsdaten in der Windparkkomponente auf einer Speicherkarte gespeichert. Die Speicherkarte ist ein separates Speicherteil, das ohne weiteres aus der Steuereinheit der Windparkkomponente herausgenommen werden kann. Ein Zugriff auf die Betriebsdaten ist in diesem Fall auch dann möglich, wenn die normalerweise für den Zugriff verwendete Datenleitung ausgefallen ist. Ein Servicetechniker kann die Speicherkarte physikalisch herausnehmen und die Betriebsdaten unabhängig von der Windparkkomponente auslesen und von seinem Rechner aus an die Empfänger senden oder zur Fehleranalyse weiterverarbeiten.

Nicht alle Betriebsdaten, die in den Windparkkomponenten aufgenommen werden, sind für alle Empfänger von Belang. So sind für den Kunden eher die Betriebsdaten von Interesse, die die produzierte und abgegebene elektrische Leistung betreffen, während er beispielsweise kein Interesse an Fehlermeldungen hat, die eine Wartung erforderlich machen. Die Betriebsdaten können deswegen nach Gesichtspunkten dieser Art gegliedert und in separaten Dateien gespeichert werden. Es werden dann nur die Dateien gesendet, die für die betreffende Empfängergruppe von Belang sind, die übrigen Dateien werden nicht gesendet.

Darüber hinaus können die Betriebdaten auch mehrfach auf mehreren Speicherkarten unter separat einstellbaren Kriterien abgespeichert werden und nach voneinander unabhängigen Gesichtspunkten unabhängig voneinander an unterschiedliche Empfänger gesendet werden, so dass unterschiedliche Kunden nur mit den für sie relevanten Daten versorgt werden. Beispielsweise kann die durchschnittliche Energieproduktion und Verfügbarkeit der Windenergieanlage für den Betreiber unter wirtschaftlichen Gesichtspunkten interessant sein, die aber nur einmal wöchentlich übermittelt werden sollen, während die weiteren aktuellen Spannungswerte und eingespeisten Ströme stündlich an den Energieversorgungsunternehmen zur Energiebilanzierung im elektrischen Netz übermittelt werden müssen.

Ist der Kunde ein Energieversorgungsunternehmen, so verfügt er über Informationen, beispielsweise Daten über das Stromversorgungsnetz, über die der Betreiber des Windparks nicht verfügt. Der Kunde kann mit den Betriebsdaten also Auswertungen vornehmen, die dem Betreiber nicht möglich sind. Um solche Auswertungsergebnisse auch dem Betreiber zugänglich zu machen, ist es günstig, sie einfach an die betreffende Windparkkomponente zurückzusenden, so dass sie dort gespeichert werden können. Der Betreiber kann dann nach Bedarf auf die Auswertungsergebnisse des Kunden zugreifen. Eine unmittelbare Kontaktaufnahme zwischen dem Kunden und dem Betreiber ist nicht erforderlich.

Die Erfindung wird nachfolgend unter Bezugnahme auf die beigefügte Zeichnung anhand einer vorteilhaften Ausführungsform beispielhaft beschrieben. Die Figur zeigt einen Windpark mit zugehörigem Datennetz.

Ein insgesamt mit 10 bezeichneter Windpark umfasst eine Mehrzahl von Windenergieanlagen 11 mit zugehörigen Steuereinheiten 12. Der Windpark 10 umfasst ferner eine Wetterstation 13 mit einer Steuereinheit 14 und eine Übergabestation 15 mit einer Steuereinheit 16. Die Steuereinheiten 12, 14, 16 sind Bestandteile der betreffenden Windparkkomponenten.

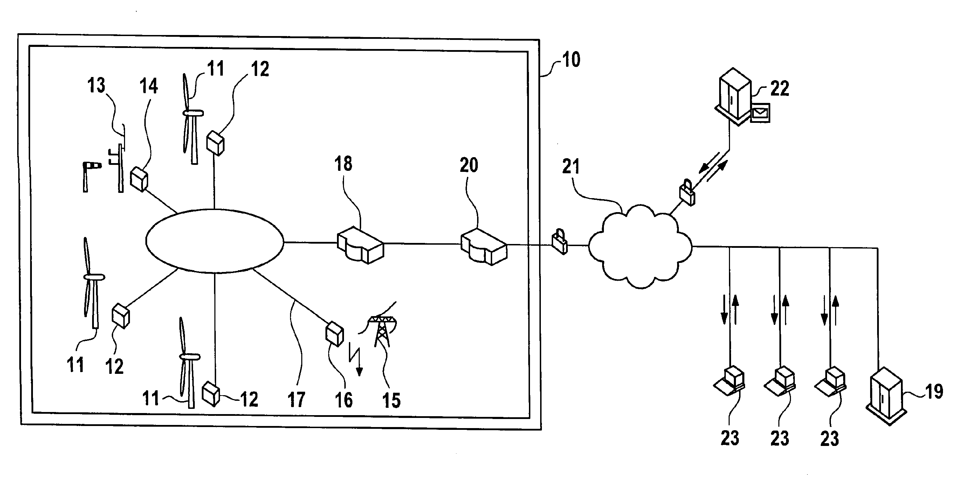

Die Steuereinheiten 12, 14, 16 sind über eine Datenleitung 17 miteinander und mit einem Router 18 verbunden. Mit einem Verschlüsselungsmodul 20 werden die von dem Router 18 kommenden Daten verschlüsselt, bevor sie an das öffentliche Internet 21 übergeben werden. Die Verbindung ist also sicher gegenüber Dritten. Bis zum Verschlüsselungsmodul 20 ist der Betreiber des Windparks 10 für das Datennetz verantwortlich. Jenseits des Verschlüsselungsmoduls 20 liegt die Verantwortung für das Datennetz beim Kunden, der den in dem Windpark 10 produzierten Strom abnimmt. Über das Internet 21 sind zwei Server 19, 22 sowie mehrere Clients 23 mit dem Datennetz des Windparks 10 verbunden. Im Ausführungsbeispiel der Fig. 1 wir nur zu dem Server 22 eine verschlüsselte Verbindung hergestellt, während die Verbindungen zu dem Server 19 und den Clients 23 unverschlüsselt sind. Es kann also individuell gewählt werden, ob die Verbindung verschlüsselt sein soll und ggf. welcher Schlüssel verwendet wird.

In den Windparkkomponenten 11, 13, 15 werden laufend Betriebsdaten über die Windparkkomponenten 11, 13, 15 sowie die Umgebungsbedingungen aufgenommen. Die Betriebsdaten werden in nicht dargestellten Speicherkarten in den Steuereinheiten 12, 14, 16 gespeichert. Wenn eine vorgegebene Bedingung eintritt, wie beispielsweise Ablauf einer bestimmten Zeitspanne, Überschreiten einer bestimmten Datenmenge in der Speicherkarte oder ein sonstiges, nicht-regelmäßiges Ereignis, so werden die Betriebsdaten an den Server 19, den Server 22 und die Clients 23 gesendet. Der Kunde kann mit den Betriebsdaten die gewünschten Auswertungen vornehmen. Auswertungsergebnisse, die für den Betreiber des Windparks 10 von Interesse sein können, können in umgekehrter Richtung an die Windparkkomponenten zurückgesendet werden und dort gespeichert werden.

Die Server 19, 22 können mit verschiedenen an sich bekannten Übertragungsprotokollen und -verfahren ausgestattet sein und beispielsweise als FTP-Server oder als SMTP-Server ausgebildet sein. In letzterem Fall werden die Betriebsdaten in Form von E-Mails an vordefinierte Adressen verschickt.

## Patentansprüche

1. Verfahren zum Bereitstellen von Betriebsdaten eines Windparks (10), wobei der Windpark (10) mehrere Windparkkomponenten (11, 13, 15) umfasst, mit den Schritten:
a. Aufnehmen von Betriebsdaten einer Windparkkomponente (11, 13, 15);
b. Speichern der Betriebsdaten in der zugehörigen Windparkkomponente (11, 13, 15);
c. Senden der Betriebsdaten in einem Push-Verfahren an einen Empfänger (19, 22, 23) außerhalb des Windparks.

2. Verfahren nach Anspruch 1, **dadurch gekennzeichnet, dass** die Betriebsdaten in Schritt c) in Abhängigkeit von einem nicht-regelmäßigen Ereignis gesendet werden.

3. Verfahren nach Anspruch 2, **dadurch gekennzeichnet, dass** das nicht-regelmäßige Ereignis eine in der Windparkkomponente (11, 13, 15) eingegangene Nachricht ist.

4. Verfahren nach einem der Ansprüche 1 bis 3, **dadurch gekennzeichnet, dass** die Betriebsdaten in Schritt b) in einer Speicherkarte gespeichert werden.

5. Verfahren nach einem der Ansprüche 1 bis 4, **dadurch gekennzeichnet, dass** die Betriebsdaten in Schritt b) in gegliederter Form gespeichert werden und dass ein Teil der Betriebsdaten in Schritt c) nicht gesendet wird.

6. Verfahren nach einem der Ansprüche 1 bis 5, **dadurch gekennzeichnet, dass** die in Schritt c) gesendeten Betriebsdaten ausgewertet werden und dass ein Ergebnis der Auswertung an die Windparkkomponente (11, 13, 15) übermittelt wird.

7. Verfahren nach einem der Ansprüche 1 bis 6, **dadurch gekennzeichnet, dass** die Betriebsdaten an eine Mehrzahl von Empfängern (19, 22, 23) gesendet werden.

8. Verfahren nach Anspruch 7, **dadurch gekennzeichnet, dass** die Daten nicht aus dem Speicher (12, 14, 16) der Windparkkomponente (11, 13, 15) gelöscht werden, bevor die Betriebsdaten an alle Empfänger (19, 22, 23) gesendet wurden.

9. Verfahren nach einem der Ansprüche 1 bis 8, **dadurch gekennzeichnet, dass** die Betriebsdaten in verschlüsselter Form an den Empfänger (19, 22, 23) übermittelt werden.

10. Verfahren nach einem der Ansprüche 1 bis 9, **dadurch gekennzeichnet, dass** bei einer Mehrzahl von Windparkkomponenten (11, 13, 15) das Senden von Betriebsdaten zeitlich aufeinander abgestimmt ist.

11. Verfahren nach Anspruch 10, **dadurch gekennzeichnet, dass** das Senden derart zeitlich abgestimmt ist, dass die Sendezeiträume einer Mehrzahl von Windparkkomponenten (11, 13, 15) sich nicht überschneiden.
